(19) Europäisches Patentamt / European Patent Office / Office européen des brevets

(11) **EP 1 993 280 B1**

(12) **EUROPEAN PATENT SPECIFICATION**

(45) Date of publication and mention
of the grant of the patent:
**16.01.2013 Bulletin 2013/03**

(51) Int Cl.:
***H04N 5/232*** *(2006.01)* ***H04N 5/77*** *(2006.01)*

(21) Application number: **08251735.0**

(22) Date of filing: **16.05.2008**

(54) **Imaging apparatus and method , and computer program product**

Vorrichtung und Verfahren zur Bildaufnahme sowie Computerprogrammprodukt

Appareil et procédé d'imagerie, et produit de programme informatique

(84) Designated Contracting States:
**DE FR GB**

(30) Priority: **17.05.2007 JP 2007131248**

(43) Date of publication of application:
**19.11.2008 Bulletin 2008/47**

(73) Proprietor: **FUJIFILM Corporation
Minato-ku
Tokyo (JP)**

(72) Inventor: **Okamoto, Satoru,
c/o FUJIFILM Corporation
Kurokawa-gun
Miyagi (JP)**

(74) Representative: **Stevens, Jason Paul
Dehns
St Bride's House
10 Salisbury Square
London
EC4Y 8JD (GB)**

(56) References cited:
**EP-A1- 1 641 246**    **EP-A2- 1 689 170**
**JP-A- 2005 348 178**    **JP-A- 2006 165 853**
**US-A1- 2003 093 810**    **US-A1- 2003 193 610**

**Description**

BACKGROUND OF THE INVENTION

Field of the Invention

The present invention relates to an imaging apparatus and method for generating an image file of a moving picture through imaging. The invention also relates to a computer program product for causing a computer to perform the imaging method.

Description of the Related Art

Digital cameras have the ability to take moving pictures, as well as the ability to take still pictures, and as the capacity of recording media is increased, it has become possible to take moving pictures more freely and easily.

In the mean time, if a camera shake occurs during imaging, the reproduced image becomes very annoying. Consequently, a digital camera in which recording and termination of a moving picture is controlled by detecting a camera shake is proposed as described, for example, in Japanese Unexamined Patent Publication No. 2005-348178. Further, a method in which camera works, such as panning, zooming, and the like are detected and information thereof is attached to the image file of the moving picture, then after the imaging, the image file is divided into a plurality of files using the information is proposed as described, for example, in Japanese Unexamined Patent Publication No. 2004-056397.

If a moving picture is recorded continuously, however, the file size of the moving picture becomes very large and a considerable time is required for making a copy of the file or moving the image data to another file. In such a case, it will be a great loss if the image file is erased accidentally, since the entire moving picture is lost. Hence, the method described in Japanese Unexamined Patent Publication No. 2005-348178 is used to divide and record one moving picture into a plurality of image files through control of record and termination of the moving picture by detecting camera shakes. Further, use of the method described in Japanese Unexamined Patent Publication No. 2004-056397 allows division of a long moving picture into image files capable of reproducing short moving pictures.

When recording and termination of a moving picture are repeated every time a camera shake is detected, however, the moving picture will be chopped up if the camera shake is frequently detected and moving picture becomes very annoying. Further, in the method described in Japanese Unexamined Patent Publication No. 2004-056397, an image file will not be divided if zooming, panning or like is not performed.

EP1689170 A2 discloses an imaging apparatus which prevents blurred images that are generated by camera motion. The camera motion is detected before the actual photographing starts. Only if the amount of camera motion does not exceed a threshold continuous photographing is started.

SUMMARY OF THE INVENTION

The present invention has been developed in view of the circumstances described above, and it is an object of the present invention to allow an image file of a moving picture to be divided without causing the image to be chopped up.

A first imaging apparatus of the present invention is an apparatus including:

an imaging means for obtaining a moving picture through imaging and generating an image file of the moving picture;
a camera shake detection means for detecting a camera shake amount during imaging; and
an imaging control means for controlling the imaging means and the camera shake detection means such that the following are performed: receiving an instruction to start imaging the moving picture; detecting a camera shake amount after the imaging time of the moving picture reaches a predetermined time which is shorter than a predetermined continuous imaging time during which one image file is generated; determining whether or not the camera shake amount is greater than or equal to a predetermined amount; and terminating the imaging of the moving picture to terminate the generation of the image file which is capable of reproducing the moving picture imaged so far when the camera shake amount is greater than or equal to the predetermined amount.

Here, if the camera shake amount does not exceed the predetermined amount after the predetermined time, the imaging will be terminated to terminate the generation of the image file at the end of the continuous imaging time.

In the first imaging apparatus of the present invention, the imaging control means may be a means for controlling the imaging means and the camera shake detection means such that the following are performed subsequent to the termination of the generation of the image file: restarting the imaging of the moving picture to start generating a new image file; and repeating the generation of a new image file until an instruction to terminate the imaging of the moving picture is received.

A second imaging apparatus of the present invention is an apparatus including:

an imaging means for obtaining a moving picture through imaging and generating an image file of the moving picture;

a camera shake detection means for detecting a camera shake amount during imaging; and

an imaging control means for controlling the imaging means and the camera shake detection means such that the following are performed: receiving an instruction to start imaging the moving picture; detecting a camera shake amount after the imaging time of the moving picture reaches a predetermined time which is shorter than a predetermined continuous imaging time during which one image file is generated; determining whether or not the camera shake amount is greater than or equal to a predetermined amount; generating the image file at a smaller size than before until the end of the continuous imaging time when the camera shake amount is greater than or equal to the predetermined amount; and terminating the imaging of the moving picture to terminate the generation of the image file at the end of the continuous imaging time.

Here, if the camera shake amount does not exceed the predetermined amount after the predetermined time, the imaging will be continued until the end of the continuous imaging time without reducing the size of the moving picture.

Here, any of known methods such as decreasing the frame rate of the moving picture, increasing the compression ratio, decreasing the level of the image processing, and the like may be used for reducing the image file size.

In the second imaging apparatus of the present invention, the imaging control means may be a means for controlling the imaging means and the camera shake detection means such that the following are performed subsequent to the termination of the generation of the image file: restarting the imaging of the moving picture to start generating a new image file; and repeating the generation of a new image file until an instruction to terminate the imaging of the moving picture is received.

Further, in the second imaging apparatus of the present invention, the imaging control means may be a means for controlling the imaging means to generate the image file such that the greater the camera shake amount the smaller the size.

A first imaging method of the present invention is a method including the steps of:

receiving an instruction to start imaging the moving picture;

detecting a camera shake amount after the imaging time of the moving picture reaches a predetermined time which is shorter than a predetermined continuous imaging time during which one image file is generated;

determining whether or not the camera shake amount is greater than or equal to a predetermined amount; and

terminating the imaging of the moving picture to terminate the generation of the image file which is capable of reproducing the moving picture imaged so far when the camera shake amount is greater than or equal to the predetermined amount.

A second imaging method of the present invention is a method including the steps of:

receiving an instruction to start imaging the moving picture;

detecting a camera shake amount after the imaging time of the moving picture reaches a predetermined time which is shorter than a predetermined continuous imaging time during which one image file is generated; determining whether or not the camera shake amount is greater than or equal to a predetermined amount;

determining whether or not the camera shake amount is greater than or equal to a predetermined amount;

generating the image file at a smaller size than before until the end of the continuous imaging time when the camera shake amount is greater than or equal to the predetermined amount; and

terminating the imaging of the moving picture to terminate the generation of the image file at the end of the continuous imaging time.

The first and second imaging methods may be provided as computer program products that cause a computer to perform the methods.

According to the first imaging apparatus and method of the present invention, an instruction to start imaging a moving picture is received, then a camera shake amount is detected after the imaging time of the moving picture reaches a predetermined time which is shorter than a predetermined continuous imaging time during which one image file is generated, and a determination is made as to whether or not the camera shake amount is greater than or equal to a predetermined amount. Then, the imaging of the moving picture is terminated to terminate the generation of the image file which is capable of reproducing the moving picture imaged so far when the camera shake amount is greater than or equal to the predetermined amount. This may prevent the moving picture with a large camera shake amount and hence having low usability from being recorded after the predetermined time, so that file size becomes smaller than that of the image file generated by continuing the imaging to the end of the continuous imaging time regardless of camera shakes occurred, which may prevent wasteful usage of a recording medium used for recording the moving image. Further, since the imaging is continuously performed until at least to the predetermined time, the moving picture is not chopped so often, and the moving picture may be divided into a plurality of image files while the imaging is performed.

According to the second imaging apparatus and method of the present invention, an instruction to start imaging a moving picture is received, then a camera shake amount is detected after the imaging time of the moving picture reaches a predetermined time which is shorter than a predetermined continuous imaging time during which one image file is generated, and a determination is made as to whether or not the camera shake amount is greater than or equal to a predetermined amount. Then, the image file is generated at a smaller size than before until the end of the continuous imaging time when the camera shake amount is greater than or equal to the predetermined amount, and the imaging of the moving picture is terminated to terminate the generation of the image file at the end of the continuous imaging time. This reduces the size of the moving picture with a large camera shake amount and hence having low usability, so that the file size becomes smaller than that of the image file generated by continuing the imaging to the end of the continuous imaging time regardless of camera shakes occurred, which may prevent wasteful usage of a recording medium used for recording the moving image. Further, since the imaging is continuously performed until the end of the continuous imaging time, the moving picture is not chopped so often, and the moving picture may be divided into a plurality of image files while the imaging is performed.

Further, the size of an image file may be reduced more effectively by generating the image file such that the greater the camera shake amount the smaller the size.

BRIEF DESCRIPTION OF THE DRAWINGS

Figure 1 is a schematic block diagram of a digital camera to which an imaging apparatus according to a first embodiment of the present invention is applied, illustrating the internal configuration thereof.

Figure 2 is a flowchart illustrating processing steps performed in the first embodiment.

Figure 3 is a flowchart illustrating imaging processing steps of a still picture.

Figure 4 is a schematic block diagram of a digital camera to which an imaging apparatus according to a second embodiment of the present invention is applied, illustrating the internal configuration thereof.

Figure 5 is a flowchart illustrating processing steps performed in the second embodiment.

Figure 6 is a flowchart illustrating processing steps performed in a third embodiment.

DESCRIPTION OF THE PREFERRED EMBODIMENTS

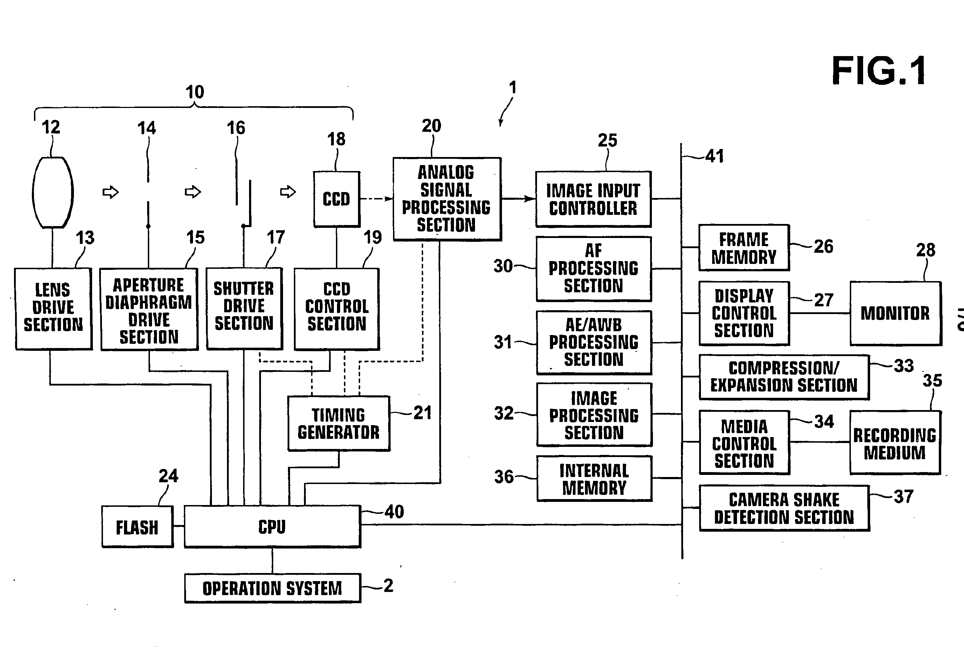

Hereinafter, exemplary embodiments of the present invention will be described with reference to the accompanying drawings. Figure 1 is a schematic block diagram of a digital camera to which an imaging apparatus according to a first embodiment of the present invention is applied, illustrating the internal configuration thereof. As shown in Figure 1, the digital camera 1 includes an operation system 2 having a release button, a mode dial and the like.

An imaging system 10 has a taking lens 12 which includes a focus lens and a zoom lens. The focus lens and the zoom lens constituting the taking lens 12 are movable in the optical axis directions by a lens drive section 13.

An aperture diaphragm 14 is driven by an aperture diaphragm drive section 15. The aperture diaphragm drive section 15 controls the diameter of the aperture diaphragm based on aperture value data outputted from an AE /AWB control section 31.

A shutter 16 is a mechanical shutter and is driven by a shutter drive section 17. The shutter drive section 17 performs open/close control of the shutter 16 according to a signal generated when the release button is depressed and shutter speed data outputted from the AE/AWB control section 31.

A CCD 18, which is an image sensor, is provided on the rear side of the shutter 16. The CCD 18 has a photoelectric surface that includes multitudes of light receiving elements disposed two-dimensionally, and the light representing a subject image transmitted through an optical system including the taking lens 12 is focused on the photoelectric surface and subjected to a photoelectric conversion. In front of the photoelectric surface, a micro-lens array for focusing light on each pixel and a color filter array in which R, G, and B color filters are arranged regularly are disposed. The CCD 18 outputs charges stored in the respective pixels line by line as serial analog image signals in synchronization with a vertical transfer clock signal and a horizontal transfer clock signal supplied from a CCD control section 19. The charge storage time of each pixel, that is, exposure time is determined by an electronic shutter drive signal supplied from the CCD control section 19. The CCD 18 is gain-adjusted by the CCD control section 19 so that an analog image signal having a predetermined level is obtained.

An analog image signal picked up by the CCD 18 is inputted to an analog signal processing section 20. The analog signal processing section 20 includes: a correlated double sampling circuit (CDS) for removing noise from the analog signal; an automatic gain controller (AGC) for controlling the gain of the analog signal; and an A/D converter (ADC) for converting the analog signal to a digital signal. Hereinafter, processing performed by the analog signal processing section 20 is referred to as "analog signal processing". The image data converted to digital signal are CCD-RAW data in which each pixel has R, G, B density values.

A timing generator 21 is a generator that generates timing signals, which are inputted to the shutter drive section 17, CCD control section 19, and analog signal processing section 20, thereby the operation of the release button, open/close of the shutter 16, charge acquisition of the CCD 18, and the processing of the analog signal processing section 20 are synchronized.

The digital camera 1 further includes a flash 24 that emits flash light when required at the time of imaging.

An image input controller 25 writes the CCD-RAW data, inputted from the analog signal processing section 20, into a frame memory 26.

The frame memory 26 is a work memory used when various types of image processing (signal processing), to be described later, are performed on the image data, and constituted, for example, by a SDRAM (Synchronous Dynamic Random Access Memory) that performs data transfer in synchronization with a bus clock signal having a constant frequency.

A display control section 27 is a control section for causing a liquid crystal monitor 28 to display the image data stored in the frame memory 26 as through images, or to display a still picture or a moving picture stored in the recording medium 35 when in playback mode.

The AF processing section 30 and AE/AWB processing section 31 determine an imaging condition based on a pre-image. The pre-image is an image based on the image data stored in the frame memory 26 as a result of pre-imaging performed by the CCD 18, which is caused by the CPU 40 that has detected a halfway depression signal generated when the release button is depressed halfway.

The AF processing section 30 detects a focus position based on the pre-image, and outputs focus drive amount data (AF processing). As for the focus position detection method, for example, a passive method may be used, which makes use of the fact that the contrast becomes high when a desired subject is focused.

The AE/AWB processing section 31 measures subject brightness based on the pre-image, determines ISO sensitivity, aperture value, shutter speed, and the like, and determines the ISO sensitivity data, aperture value data, and shutter speed data as an exposure setting value(AE control), as well as automatically adjusting the white balance at the time of imaging (AWB control).

The image processing section 32 performs image quality control on the image data of a final image including tone correction, sharpness correction, color correction and the like, and YC processing in which CCD-RAW data are converted to YC data constituted by Y data (luminance signal data), Cb data (blue color difference signal data), and Cr data (red color difference signal data). The term "final image" as used herein means an image based on image data picked up by the CCD 18 through a main imaging performed when the release button is fully depressed and stored in the frame memory 26 via the analog signal processing section 20 and the image input controller 25. The image processing section 32 also performs required processing on the image data of a moving picture.

A compression/expansion section 33 generates an image file, by performing, for example, JPEG format compression on the image data of a final image processed/converted by the image processing section 32. A tag that includes auxiliary information, such as the date and time of imaging, and the like stored based on, for example, Exif format or the like, is attached to the image file. When imaging is performed in the moving picture mode, the compression/expansion section 33 generates an image file of the moving picture by compressing the image data of the moving picture by motion JPEG, MPEG-1, MPEG-2, MPEG-4, H.264, or the like.

The media control section 34 gains access to the recording medium 35 to control read/write operations of image files.

An internal memory 36 stores various constants to be set within the digital camera 1, a program to be performed by the CPU 40, and the like.

A camera shake detection section 37 detects the amount of camera shake during imaging. More specifically, the camera shake detection section 37 calculates a movement vector between two consecutive frames of a moving picture, calculates the number of pixels corresponding to each camera shake width in the horizontal and vertical directions from the movement vector, and detects either a smaller or a larger number of pixels calculated in the horizontal and vertical directions, or otherwise the average value thereof as the amount of the camera shake. As for the camera shake detection section 37, a mechanical sensor, such as a vibration gyro or the like, or an acceleration sensor that detects acceleration may be used.

The CPU 40 controls each section of the main body of the digital camera 1 in response to the signals from various sections, including the operation system 2, AF control section 30 and the like. Further, when the operation mode of the digital camera 1 is set to the moving picture imaging mode, the CPU 40 receives user inputs for setting a continuous imaging time for a moving picture to be imaged, a camera shake amount detection start time to be described later, and a camera shake amount threshold value Th1 from the operation system 2. The setting results are stored in the internal memory. Here, the camera shake amount detection start time is set to a desired time prior to the end of the continuous imaging time. For example, when the continuous imaging time is set to 60 minutes, the camera shake amount detection start time is set to 55 minutes.

Here, a maximum number of pixels, for example 10 pixels corresponding to a threshold camera shake width, is set as the camera shake amount threshold value Th1. The continuous imaging time, camera shake amount detection start time, and camera shake amount threshold value Th1 may be set by the user. Alternatively, they may be preset as default values and stored in the internal memory 36 at the time of shipping.

Then, when instruction to start imaging a moving picture is received from the user, the CPU 40 controls each of the sections of the digital camera 1, including the imaging system 10 and camera shake detection section 37 such that the following are performed: determining whether or not the imaging time of the moving picture reaches the camera shake amount detection start time which is shorter than the continuous imaging time, terminating the imaging and closing the image file of the moving picture that has been obtained so far through the imaging to terminate the generation of the image file capable of reproducing the moving picture obtained during the time from the start to the termination of the imaging if a camera shake amount is greater than or equal to the threshold value Th1 after the camera shake amount detection start time, restarting the imaging and opening a new file to start generating a new image file, and thereafter repeating the determination, closing of the image file, and opening of a new image file until an instruction to terminate the imaging of the moving picture is received from the user.

A data bus 41 is connected to each of the processing sections, frame memory 26, CPU 40 and the like, and image data, various instructions and the like are exchanged therethrough.

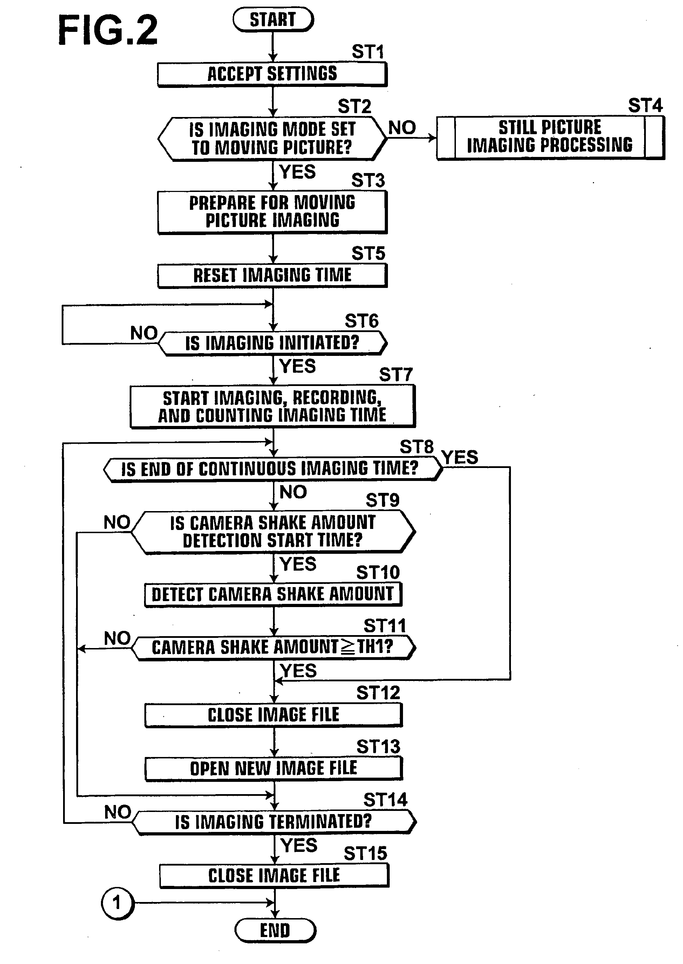

Next, processing steps performed in the first embodiment will be described. Figure 2 is a flowchart illustrating the processing steps performed in the first embodiment. When the operation mode of the digital camera 1 is set to imaging mode, the processing is initiated by the CPU 40, and user inputs of a continuous imaging time, a camera shake amount detection start time, and a threshold value Th1 inputted through the operation system 2 are received (setting reception: step ST1). The setting reception may be omitted if they are preset.

Next, the CPU 40 determines whether or not the imaging mode is moving picture imaging mode (step ST2), and if step ST2 is positive, preparation for imaging a moving picture is performed to allow an immediate start of the imaging(step ST3). If step ST2 is negative, imaging processing of a still picture is performed (step ST4), which will be described later. Then, the imaging time is reset (step ST5), and monitoring whether or not an instruction to start imaging is given by the user through depression of the release button is initiated (step ST6). If step ST6 is positive, imaging and recording of the moving picture, and imaging time counting is initiated (step ST7).

Then a determination is made as to whether or not the imaging time reaches the end of the continuous imaging time (step ST8), and if step ST8 is negative, a further determination is made as to whether or not the imaging time reaches the camera shake amount detection start time (step ST9). If step ST9 is positive, a camera shake amount is detected by the camera shake detection section 37 (step ST10), and a determination is made by the CPU 40 as to whether or not the camera shake amount is greater than or equal to the camera shake amount threshold value Th1 (step ST11). If step ST9 is negative, the processing proceeds to step ST14, to be described later.

If step ST11 is positive, the imaging of the moving picture is terminated to close the image file of the moving picture (step ST12), then the imaging is restarted and a new image file is opened (step ST13). That is, generation of the image file representing the moving picture obtained during the period from the start of the imaging and the time when the camera shake amount is greater than or equal to the threshold value Th1 is terminated, then generation of a new file of the moving picture is initiated.

Then, a determination is made as to whether or not an instruction to terminate the imaging is given by the user through depression of the release button (step ST14).If the step ST14 is positive, the imaging is terminated and the image file of the moving picture is closed (step ST15), then the processing is terminated. If step ST14 is negative, the processing returns to step ST8 and steps from step ST8 onward are repeated.

In the mean time, if step ST8 is positive, the processing proceeds to step ST12 to terminate the imaging and to close the image file such that the moving picture obtained within the continuous imaging time to be reproducible, and the imaging is restarted in step ST13 and a new file is opened. That is, the imaging is terminated to terminate the generation of the image file representing the moving picture having a reproducing time shorter than the continuous imaging time, and then the imaging is restarted and generation of a new image file is initiated.

As for the reproducing time shorter than the continuous imaging time, for example, may be 59 minutes 59 seconds when the continuous imaging time is set to 60 minutes, that is, 1 second shorter than the continuous imaging time. It is noted, however, that the reduction of the reproducing time from the continuous imaging time is not limited to 1 second. Where the frame rate is 30 fps, the reproducing time may be 59 minutes 59 seconds and the time to 29 frames. In this case also, the number of frames to make the reproducing time shorter than the continuous imaging time is not limited to 1 frame.

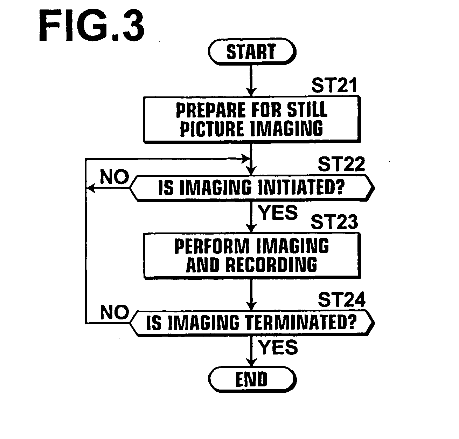

Figure 3 is a flowchart of imaging processing of a still picture. First, the CPU 40 performs preparation for imaging a still picture (step ST21), and start monitoring whether or not the imaging is performed by the user through depression of the release button (step ST22). If step ST22 is positive, imaging of the still picture and recording of the image on the recording medium 35 are performed (step ST23). Then, a determination is made as to whether or not an instruction to terminate the imaging of the still picture is given by the user through switching off the power, changing the operation mode, or the like (step ST24) . If step ST24 is negative, the processing returns to step ST22, while if step ST24 is positive, the processing is terminated.

As described above, in the first embodiment, after the imaging time of a moving picture for generating an image file recorded on the recording medium 35 reaches a camera shake amount detection start time which is shorter than a preset continuous imaging time, if a camera shake amount is greater than or equal to a camera shake amount threshold value Th1, the imaging is terminated and the generation of the image file capable of reproducing the moving picture obtained during the time from the start to the termination of the imaging is terminated, then the imaging is restarted and the generation of a new image file is initiated, and new image file generation is repeated until an instruction to terminate the imaging of the moving picture is received.

This allows the imaging of a moving picture to be performed continuously until at least to the camera shake amount detection start time, so that the moving image is not chopped up and the moving picture may be divided into a plurality of image files while the imaging is performed. Further, after the imaging time reaches the camera shake amount detection start time, images with large camera shake amounts and hence having low usability are not recorded, so that the file size becomes smaller than that of the image file generated by continuing the imaging to the end of the continuous imaging time regardless of camera shakes occurred, which may prevent wasteful usage of the recording medium 35.

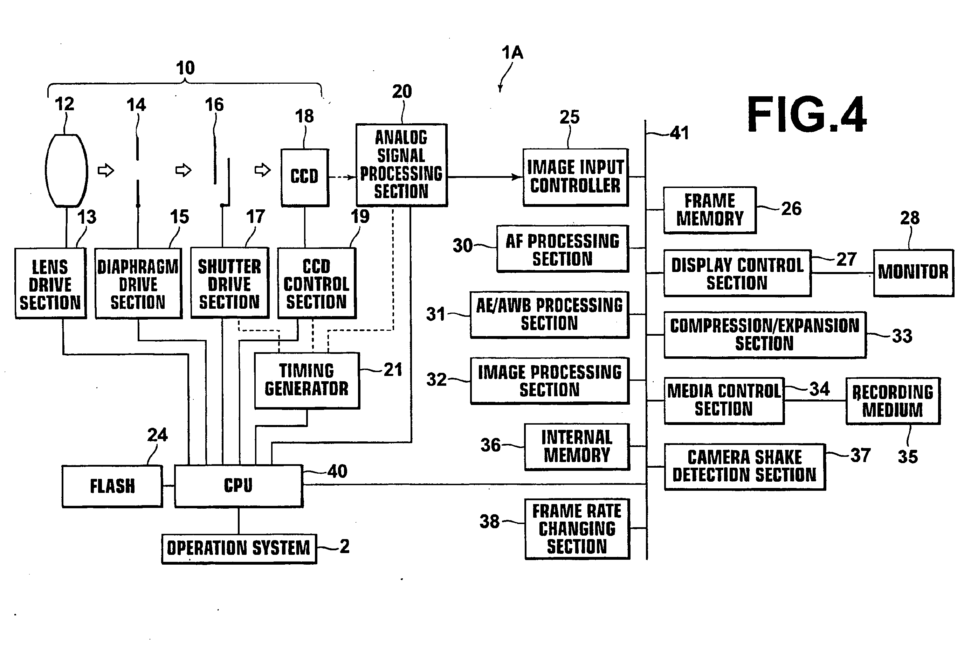

Next, a second embodiment of the present invention will be described. Figure 4 is a schematic block diagram of a digital camera to which an imaging apparatus according to a second embodiment of the present invention is applied, illustrating the internal configuration thereof. In the second embodiment, components identical to those of the first embodiment are given the same reference numerals and will not be elaborated upon further here. The digital camera 1A according to the second embodiment differs from the digital camera 1 according to the first embodiment in that it includes a frame rate changing section 38 for changing the frame rate of a moving picture when a camera shake amount is greater than or equal to a threshold value Th2.

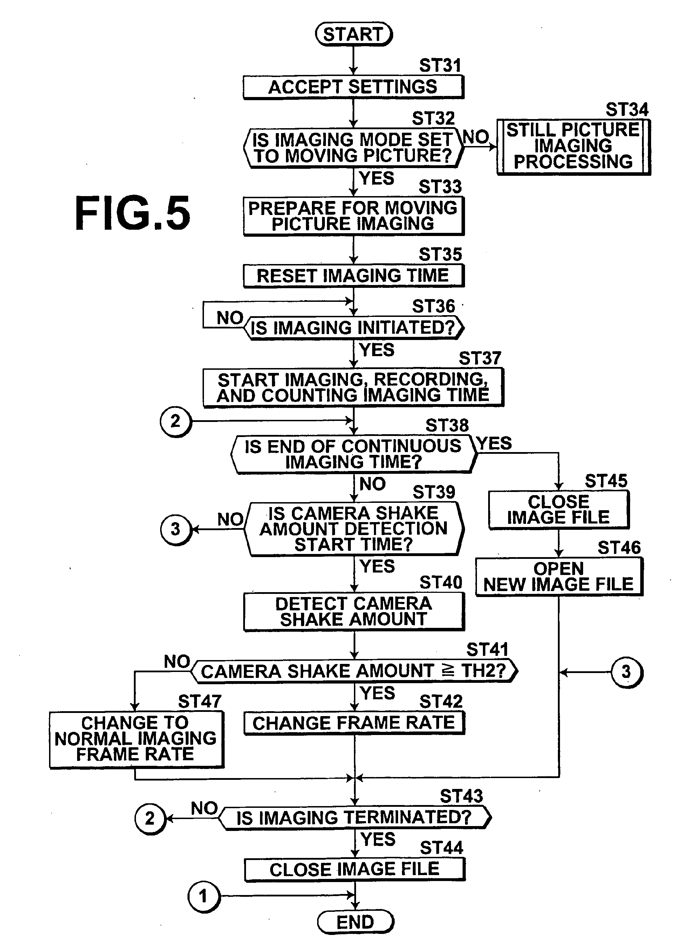

Processing steps performed in the second embodiment will now be described. Figure 5 is a flowchart illustrating the processing steps performed in the second embodiment. When the operation mode of the digital camera 1A is set to imaging mode, the processing is initiated by the CPU 40, and user inputs of a continuous imaging time, a camera shake amount detection start time, and a threshold value Th2 inputted through the operation system 2 are received (setting reception: step ST31). The setting reception may be omitted if they are preset. Processing steps ST32 to ST37 are identical to processing steps ST2 to ST7 in the first embodiment respectively, so that they will not elaborated further upon here.

Following step ST37, a determination is made as to whether or not the imaging time reaches the end of the continuous imaging time (step ST38), and if step ST38 is negative, a further determination is made as to whether or not the imaging time reaches the camera shake amount detection start time (step ST39). If step ST39 is positive, a camera shake amount is detected by the camera shake detection section 37 (step ST40), and a determination is made by the CPU 40 as to whether or not the camera shake amount is greater than or equal to the camera shake amount threshold value Th2 (step ST41). If step ST39 is negative, the processing proceeds to step ST43 to be described later.

If step ST41 is positive, the frame rate changing section 38 changes the frame rate of the moving picture to a camera shake frame rate which is smaller than a normal imaging frame rate (step ST42) . In the present embodiment, the camera shake frame rate is 1/2 of the normal imaging frame rate. Accordingly, if the normal imaging frame rate is 30 fps, then the frame rate is changed to 1/2 of 30 fps, that is, 15 fps. It is noted that the camera shake frame rate is not limited to 1/2 of the normal imaging frame rate, and it may be 2/3, 1/3, 1/4, or the like of the normal imaging frame rate. Here, the camera shake frame rate may be preset as a default value at the time of shipping, or it may be set by a user input. In this case, the camera shake frame rate may be inputted in terms of the ratio to the normal imaging frame rate or a numeric value of the actual frame rate (e.g., 20 fps or the like).

If step ST41 is negative, the current frame rate is changed to the normal imaging frame rate (step ST47), and the processing proceeds to step ST43. Here, if the current frame rate is the normal imaging frame rate, the frame rate will not be changed in step ST47.

Then, a determination is made as to whether or not an instruction to terminate the imaging is given by the user through depression of the release button (step ST43) . If step ST43 is positive, the imaging is terminated and the image file of the moving picture is closed (step ST44), then the processing is terminated. If step ST43 is negative, the processing returns to step ST38 and steps from step ST38 onward are repeated.

In the mean time, if step ST38 is positive, the imaging is terminated and the image file is closed such that the moving picture shorter than the continuous imaging time to be reproducible (step ST45) and the imaging is restarted and a new file is opened (step ST46), then the processing proceeds to step ST43. That is, the generation of the image file representing the moving picture having a reproducing time shorter than the continuous imaging time is terminated, and then the imaging is restarted and generation of a new image file is initiated.

As described above, in the second embodiment, after the imaging time of a moving picture for generating an image file recorded on the recording medium 35 reaches a camera shake amount detection start time which is shorter than a preset continuous imaging time, if a camera shake amount is greater than or equal to a camera shake amount threshold value Th2, the image file is generated by changing the frame rate. This allows the imaging of a moving picture to be performed continuously until the end of the continuous imaging time, so that the moving image is not chopped up and the moving picture may be divided into a plurality of image files while imaging is performed. Further, after the imaging time reaches the camera shake amount detection start time, the size of the images with large camera shake amounts and hence having low usability are reduced, so that the file size becomes smaller than that of the image file generated by continuing the imaging to the end of the continuous imaging time regardless of camera shakes occurred, which may prevent wasteful usage of the recording medium 35.

In the second embodiment, the normal imaging frame rate is changed to a predetermined frame rate when a camera shake amount is greater than or equal to the threshold value Th2, but the frame rate may be changed such that the greater the camera shake amount the smaller the frame rate, which will be described hereinafter as a third embodiment.

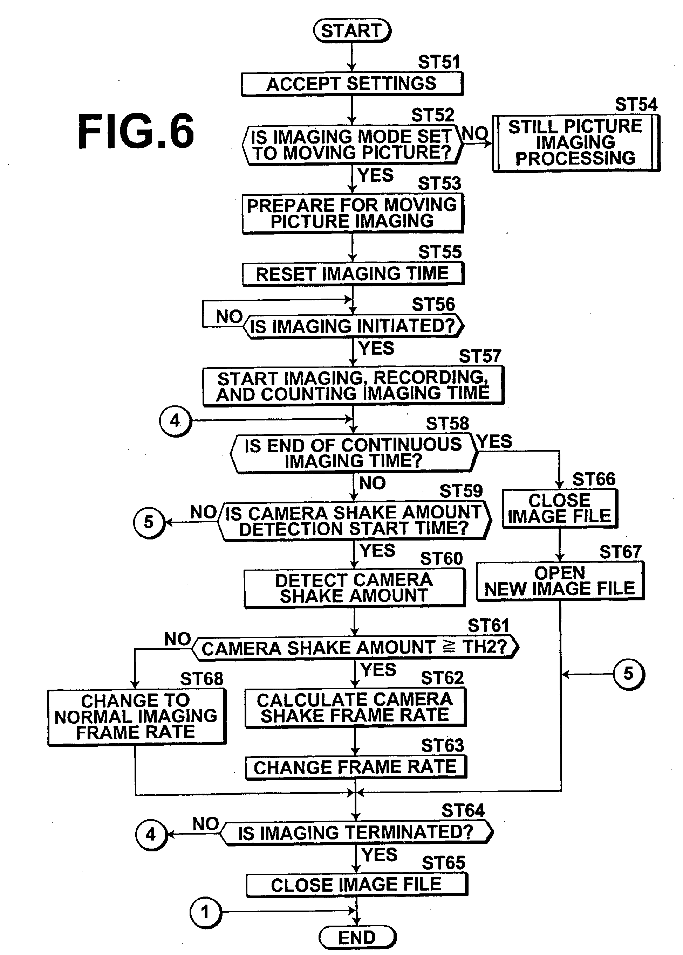

Figure 6 is a flowchart illustrating the processing steps performed in the third embodiment. In the third embodiment, processing steps ST51 to ST57 are identical to processing steps ST31 to ST37 in the second embodiment respectively, so that they will not elaborated further upon here.

Following step ST57, a determination is made as to whether or not the imaging time reaches the end of the continuous imaging time (step ST58), and if step ST58 is negative, a further determination is made as to whether or not the imaging time reaches the camera shake amount detection start time (step ST59). If step ST59 is positive, a camera shake amount is detected by the camera shake detection section 37 (step ST60), and a determination is made by the CPU 40 as to whether or not the camera shake amount is greater than or equal to the camera shake amount threshold value Th2 (step ST61). If step ST59 is negative, the processing proceeds to step ST64 to be described later.

If step ST61 is positive, the frame rate changing section 38 calculates a camera shake frame rate such that the greater the camera shake amount the smaller the camera shake frame rate (step ST62), and changes the current frame rate to the camera shake frame rate (step ST63).

In the present embodiment, if the following are assumed: normal imaging frame rate to be F, maximum number of recording pixels in the horizontal direction of a moving picture to be H, maximum number of recording pixels in the vertical direction of the moving picture to be V, number of pixels of camera shake width in the horizontal direction to be h, number of pixels of camera shake width in the vertical direction to be v, and minimum frame rate to be Fc, the frame rate changing section 38 calculates a frame rates Fh and Fv corresponding to the horizontal and vertical directions respectively by Formulae (1) and (2) below, and selects a smaller or greater one of the Fh and Fv, or otherwise the average frame rate thereof as the camera shake frame rate. The term "minimum frame rate Fc" as used herein means a minimum frame rate that allows a moving image to be reproduced, and, for example, 5 fps may be used as the minimum frame rate Fc.

$$Fh = (F - Fc) \times (1 - h/H) + Fc \qquad (1)$$

$$Fv = (F - Fc) \times (1 - v/V) + Fc \qquad (2)$$

If step ST61 is negative, the current frame rate is changed to the normal imaging frame rate (step ST68), and the processing proceeds to step ST64. Here, if the current frame rate is the normal imaging frame rate, the frame rate will not be changed in step ST47.

Then, a determination is made as to whether or not an instruction to terminate the imaging is given by the user through depression of the release button (step ST64) . If step ST64 is positive, the imaging is terminated and the image file of the moving picture is closed (step ST65), then the processing is terminated. If step ST64 is negative, the processing returns to step ST58 and steps from step ST58 onward are repeated.

In the mean time, if step ST58 is positive, the imaging is terminated and the image file is closed such that the moving picture shorter than the continuous imaging time to be reproducible (step ST66) and the imaging is restarted and a new file is opened (step ST67), then the processing proceeds to step ST64. That is, the generation of the image file representing the moving picture having a reproducing time shorter than the continuous imaging time is terminated, and then the imaging is restarted and generation of a new image file is initiated.

As described above, in the third embodiment, the frame rate is changed according to the camera shake amount, so that the size of the image file may be reduced effectively.

In the second and third embodiments, a frame rate of a moving picture is changed when a camera shake amount is greater than or equal to the threshold value Th2, but, for example, a compression ratio or an image processing level of a moving picture may be changed if it may reduce the size of an image file. In the third embodiment, in particular, the size of the image file may be made smaller than that of the normal imaging by increasing the compression ratio or decreasing the level of the image processing as the camera shake amount is increased.

In the first to third embodiments, when imaging reaches the continuous imaging time, the imaging is terminated and the image file is closed such that the moving picture shorter than the continuous imaging time to be reproducible, then the imaging is restarted immediately and a new file is opened to continuously generating the image file of the moving image, but the new image file may be opened after a predetermined time from the time of the closure of the previous image file. For example, where the continuous imaging time is set to 60 minutes, the imaging is performed to the 59 minutes 59 seconds and image file is closed, then 1 second after the closure of the image file, the imaging is restarted and a new image file may be opened. Further, if the frame rate is 30 fps, the imaging is performed to the 59 minutes 59 seconds and 29 frames and image file is closed, then after the time corresponding to 1 frame, the imaging is restarted and a new image file may be opened.

Further, in the first to third embodiments, when the imaging reaches the end of the continuous imaging time and the imaging is terminated, this may be notified to the user by an alert message or sound.

Still further, in the first embodiment, when a camera shake amount is greater than or equal to the threshold value Th1 and the image file is closed, this may be notified to the user by an alert message or sound.

Further, in the second and third embodiments, when the frame rate is changed, this may be notified to the user by an alert message or sound.

Still further, in the second and third embodiments, an image file is generated such that a moving picture shorter than the continuous imaging time is reproducible. But, the image file may be generated such that a moving picture having a reproducing time corresponding to the continuous imaging time is reproducible.

So far apparatuses according to the embodiments of the present invention have been described. A program for causing a computer to perform the processing illustrated in Figures 2, 3, 5, and 6 is also one of the embodiments of the present invention. Further, a computer readable recording medium on which such program is recorded is still another embodiment of the present invention.

**Claims**

1. An imaging apparatus comprising
   an imaging means (10) for obtaining a moving picture through imaging and generating an image file of the moving picture;
   a camera shake detection means (37) for detecting a camera shake amount during imaging; and
   an imaging control means (40) for controlling the imaging means (10) and
   the camera shake detection means (37) and wherein the imaging control means (40) are further configured for:

   receiving an instruction to start imaging the moving picture; detecting a camera shake amount after the imaging time of the moving picture reaches a predetermined time which is shorter than a predetermined continuous imaging time during which one image file is generated; determining whether or not the camera shake amount is greater than or equal to a predetermined amount; and terminating the imaging of the moving picture to terminate the generation of the image file, which is capable of reproducing the moving picture imaged so far, when the camera shake amount is greater than or equal to the predetermined amount.

2. The imaging apparatus according to claim 1, **characterized in that** the imaging control means (40) perform subsequent to the termination of the generation of the image file: restarting the imaging of the moving picture to start generating a new image file; and repeating the generation of a new image file until an instruction to terminate the imaging of the moving picture is received.

3. An imaging apparatus comprising
   an imaging means (10) for obtaining a moving picture at a predetermined frame rate through imaging and generating an image file of the moving picture;
   a camera shake detection means (37) for detecting a camera shake amount during imaging; and
   an imaging control means (40) for controlling the imaging means (10) and the camera shake detection means (37) and wherein the imaging control means (40) are further configured for:

   receiving an instruction to start imaging the moving picture; detecting a camera shake amount after the imaging time of the moving picture reaches a predetermined time which is shorter than a predetermined continuous imaging time during which one image file is generated; determining whether or not the camera shake amount is greater than or equal to a predetermined amount; generating the image file at a smaller size by obtaining the moving picture at a frame rate which is smaller than the predetermined frame rate until the end of the continuous imaging time when the camera shake amount is greater than or equal to the predetermined amount; and terminating the imaging of the moving picture to terminate the generation of the image file at the end of the continuous imaging time.

4. The imaging apparatus according to claim 3, **characterized in that** the imaging control means (40) perform subsequent to the termination of the generation of the image file: restarting the imaging of the moving picture to start generating a new image file; and repeating the generation of a new image file until an instruction to terminate the imaging of the moving picture is received.

5. The imaging apparatus according to claim 3 or 4, **characterized in that** the imaging control means (40) is a means for controlling the imaging means (10) to generate the image file such that the greater the camera shake amount the smaller the size.

6. An imaging method for use with an imaging apparatus having an imaging means (10) for obtaining a moving picture through imaging and generating an image file of the moving picture, the method comprising the steps of:

   receiving an instruction to start imaging the moving picture;
   detecting a camera shake amount after the imaging time of the moving picture reaches a predetermined time which is shorter than a predetermined continuous imaging time during which one image file is generated;
   determining whether or not the camera shake amount is greater than or equal to a predetermined amount; and
   terminating the imaging of the moving picture to terminate the generation of the image file which is capable of reproducing the moving picture imaged so far when the camera shake amount is greater than or equal to the predetermined amount.

7. An imaging method for use with an imaging apparatus having an imaging means (10) for obtaining a moving picture at a predetermined frame rate through imaging and generating an image file of the moving picture, the method comprising the steps of:

   receiving an instruction to start imaging the moving picture;
   detecting a camera shake amount after the imaging time of the moving picture reaches a predetermined time which is shorter than a predetermined continuous imaging time during which one image file is generated;
   determining whether or not the camera shake amount is greater than or equal to a predetermined amount;
   determining whether or not the camera shake amount is greater than or equal to a predetermined amount;
   generating the image file at a smaller size by obtaining the moving picture at a frame rate which is smaller than the predetermined frame rate until the end of the continuous imaging time when the camera shake amount is greater than or equal to the predetermined amount; and
   terminating the imaging of the moving picture to terminate the generation of the image file at the end of the continuous imaging time.

8. A computer program product for causing a computer to perform the imaging method of claim 6.

9. A computer program product for causing a computer to perform the imaging method of claim 7.

**Patentansprüche**

1. Bildgebungsvorrichtung, die Folgendes umfasst:

   ein Bildgebungsmittel (10) zum Erhalten eines sich bewegenden Bildes durch Bildgebung und Generieren einer Bilddatei des sich bewegenden Bildes;
   ein Kameraverwacklungsdetektionsmittel (37) zum Detektieren eines Kameraverwacklungsausmaßes während der Bildgebung und
   ein Bildgebungssteuermittel (40) zum Steuern des Bildgebungsmittels (10) und des Kameraverwacklungsdetektionsmittels (37) und wobei die Bildgebungssteuermittel (40) weiterhin konfiguriert sind zum Empfangen einer Anweisung zum Beginnen der Bildgebung des sich bewegenden Bildes; Detektieren eines Kameraverwacklungsausmaßes, nachdem die Bildgebungszeit des sich bewegenden Bildes eine vorbestimmte Zeit erreicht, die kürzer ist als eine vorbestimmte kontinuierliche Bildgebungszeit, während der eine Bilddatei generiert wird; Bestimmen, ob das Kameraverwacklungsausmaß größer oder gleich oder nicht größer oder gleich einem vorbestimmten Ausmaß ist; und

Beenden der Bildgebung des sich bewegenden Bildes zum Beenden der Generierung der Bilddatei, die in der Lage ist, das soweit abgebildete, sich bewegende Bild zu reproduzieren, wenn das Kameraverwacklungsausmaß größer oder gleich dem vorbestimmten Ausmaß ist.

2. Bildgebungsvorrichtung nach Anspruch 1, **dadurch gekennzeichnet, dass** die Bildgebungssteuermittel (40) nach der Beendigung der Generierung der Bilddatei Folgendes durchführen: Neustarten der Bildgebung des sich bewegenden Bildes zum Starten des Generierens einer neuen Bilddatei und Wiederholen des Generierens einer neuen Bilddatei, bis eine Anweisung zum Beenden der Bildgebung des sich bewegenden Bildes empfangen wird.

3. Bildgebungsvorrichtung, die Folgendes umfasst:

ein Bildgebungsmittel (10) zum Erhalten eines sich bewegenden Bildes mit einer vorbestimmten Bildfrequenz durch Bildgebung und Generieren einer Bilddatei des sich bewegenden Bildes;

ein Kameraverwacklungsdetektionsmittel (37) zum Detektieren eines Kameraverwacklungsausmaßes während der Bildgebung und

ein Bildgebungssteuermittel (40) zum Steuern des Bildgebungsmittels (10) und des Kameraverwacklungsdetektionsmittels (37) und wobei die Bildgebungssteuermittel (40) weiterhin konfiguriert sind zum Empfangen einer Anweisung zum Beginnen der Bildgebung des sich bewegenden Bildes; Detektieren eines Kameraverwacklungsausmaßes, nachdem die Bildgebungszeit des sich bewegenden Bildes eine vorbestimmte Zeit erreicht, die kürzer ist als eine vorbestimmte kontinuierliche Bildgebungszeit, während der eine Bilddatei generiert wird; Bestimmen, ob das Kameraverwacklungsausmaß größer oder gleich oder nicht größer oder gleich einem vorbestimmten Ausmaß ist;

Generieren der Bilddatei mit einer kleineren Größe durch Erhalten des sich bewegenden Bildes mit einer Bildfrequenz, die kleiner ist als die vorbestimmte Bildfrequenz, bis zum Ende der kontinuierlichen Bildgebungszeit, wenn das Kameraverwacklungsausmaß größer oder gleich dem vorbestimmten Ausmaß ist; und

Beenden der Abbildung des sich bewegenden Bildes zum Beenden der Generierung der Bilddatei am Ende der kontinuierlichen Bildgebungszeit.

4. Bildgebungsvorrichtung nach Anspruch 3, **dadurch gekennzeichnet, dass** die Bildgebungssteuermittel (40) nach der Beendigung der Generierung der Bilddatei Folgendes durchführen: Neustarten der Bildgebung des sich bewegenden Bildes zum Starten des Generierens einer neuen Bilddatei und Wiederholen des Generierens einer neuen Bilddatei, bis eine Anweisung zum Beenden der Bildgebung des sich bewegenden Bildes empfangen wird.

5. Bildgebungsvorrichtung nach Anspruch 3 oder 4, **dadurch gekennzeichnet, dass** das Bildgebungssteuermittel (40) ein Mittel ist zum Steuern des Bildgebungsmittels (10) zum Generieren der Bilddatei, so dass die Größe umso kleiner ist, je größer das Kameraverwacklungsausmaß ist.

6. Bildgebungsverfahren zur Verwendung mit einer Bildgebungsvorrichtung mit einem Bildgebungsmittel (10) zum Erhalten eines sich bewegenden Bildes durch Bildgebung und Generieren einer Bilddatei des sich bewegenden Bildes, wobei das Verfahren die folgenden Schritte umfasst:

Empfangen einer Anweisung zum Starten des Abbildens des sich bewegenden Bildes;

Detektieren eines Kameraverwacklungsausmaßes, nachdem die Bildgebungszeit des sich bewegenden Bildes eine vorbestimmte Zeit erreicht, die kürzer ist als eine vorbestimmte kontinuierliche Bildgebungszeit, während der eine Bilddatei generiert wird;

Bestimmen, ob das Kameraverwacklungsausmaß größer oder gleich oder nicht größer oder gleich einem vorbestimmten Ausmaß ist; und

Beenden der Bildgebung des sich bewegenden Bildes zum Beenden der Generierung der Bilddatei, die in der Lage ist, das soweit abgebildete, sich bewegende Bild zu reproduzieren, wenn das Kameraverwacklungsausmaß größer oder gleich dem vorbestimmten Ausmaß ist.

7. Bildgebungsverfahren zur Verwendung mit einer Bildgebungsvorrichtung mit einem Bildgebungsmittel (10) zum Erhalten eines sich bewegenden Bildes mit einer vorbestimmten Bildfrequenz durch Bildgebung und Generieren einer Bilddatei des sich bewegenden Bildes, wobei das Verfahren die folgenden Schritte umfasst:

Empfangen einer Anweisung zum Starten des Abbildens des sich bewegenden Bildes;

Detektieren eines Kameraverwacklungsausmaßes, nachdem die Bildgebungszeit des sich bewegenden Bildes eine vorbestimmte Zeit erreicht, die kürzer ist als eine vorbestimmte kontinuierliche Bildgebungszeit, während der eine Bilddatei generiert wird;

Bestimmen, ob das Kameraverwacklungsausmaß größer oder gleich oder nicht größer oder gleich einem vorbestimmten Ausmaß ist;

Generieren der Bilddatei mit einer kleineren Größe durch Erhalten des sich bewegenden Bildes mit einer Bildfrequenz, die kleiner ist als die vorbestimmte Bildfrequenz, bis zum Ende der kontinuierlichen Bildgebungszeit, wenn das Kameraverwacklungsausmaß größer oder gleich dem vorbestimmten Ausmaß ist; und

Beenden der Abbildung des sich bewegenden Bildes zum Beenden der Generierung der Bilddatei am Ende der kontinuierlichen Bildgebungszeit.

8. Computerprogrammprodukt, um zu bewirken, dass ein Computer das Bildgebungsverfahren nach Anspruch 6 durchführt.

9. Computerprogrammprodukt, um zu bewirken, dass ein Computer das Bildgebungsverfahren nach Anspruch 7 durchführt.


**Revendications**

1. Appareil de formation d'image comprenant :

un moyen de formation d'image (10) pour obtenir une image mobile par l'intermédiaire de la formation d'image et de la génération d'un fichier d'image de l'image mobile ;
un moyen de détection de secousse de la caméra (37) pour détecter une importance de secousse de la caméra au cours de la formation d'image ;
un moyen de contrôle de formation d'image (40) pour contrôler le moyen de formation d'image (10) et le moyen de détection de secousse de la caméra (37) et où le moyen de contrôle de formation d'image (40) est en outre configuré pour :

recevoir une instruction pour commencer la formation d'image de l'image mobile ; détecter une quantité de secousse de la caméra après que le temps de formation d'image de l'image mobile a atteint une durée prédéterminée qui est plus courte qu'une durée de formation d'image continue prédéterminée pendant laquelle un fichier d'image est généré ; déterminer si oui ou non l'importance de secousse de la caméra est supérieure, ou égale, à une importance prédéterminée ;
et terminer la formation d'image de l'image mobile pour terminer la génération du fichier d'image, lequel est capable de reproduire l'image mobile imagée jusque là, lorsque l'importance de secousse de la caméra est supérieure, ou égale, à l'importance prédéterminée.

2. Appareil de formation d'image selon la revendication 1, **caractérisé en ce que** le moyen de contrôle de formation d'image (40) exécute, à la suite de l'achèvement de la génération du fichier d'image, un redémarrage de la formation d'image de l'image mobile pour commencer à générer un nouveau fichier d'image ; et une répétition de la génération d'un nouveau fichier d'image jusqu'à ce qu'une instruction indiquant de terminer la formation d'image de l'image mobile soit reçue.

3. Appareil de formation d'image comprenant :

un moyen de formation d'image (10) pour obtenir une image mobile à une fréquence d'image prédéterminée par l'intermédiaire de la formation d'image et de la génération d'un fichier d'image de l'image mobile ;
un moyen de détection de secousse de la caméra (37) pour détecter une importance de secousse de la caméra au cours de la formation d'image ; et
un moyen de contrôle de formation d'image (40) pour contrôler le moyen de formation d'image (10) et le moyen de détection de secousse de la caméra (37) et où le moyen de contrôle de formation d'image (40) est en outre configuré pour :

recevoir une instruction pour commencer la formation d'image de l'image mobile ; détecter une importance de secousse de la caméra après que la durée de formation d'image de l'image mobile a atteint une durée prédéterminée qui est plus courte qu'une durée de formation d'image continue prédéterminée pendant laquelle un fichier d'image est généré ; déterminer si oui ou non l'importance de secousse de la caméra est supérieure, ou égale, à une importance prédéterminée ;

générer le fichier d'image à une taille plus petite en obtenant l'image mobile à une fréquence d'image qui est inférieure à la fréquence d'image prédéterminée jusqu'à la fin de la durée de formation d'image continue lorsque l'importance de secousse de la caméra est supérieure, ou égale, à l'importance prédéterminée ; et terminer la formation d'image de l'image mobile pour terminer la génération du fichier d'image à la fin de la durée de formation d'image continue.

4. Appareil de formation d'image selon la revendication 3, **caractérisé en ce que** le moyen de contrôle de formation d'image (40), exécute, à la suite de l'achèvement de la génération du fichier d'image, un redémarrage de la formation d'image de l'image mobile pour commencer à générer un nouveau fichier d'image ; et une répétition de la génération d'un nouveau fichier d'image jusqu'à ce qu'une instruction indiquant de terminer la formation d'image de l'image mobile soit reçue.

5. Appareil de formation d'image selon la revendication 3 ou la revendication 4, **caractérisé en ce que** le moyen de contrôle de formation d'image (40) est un moyen pour contrôler le moyen de formation d'image (10) pour générer le fichier d'image de manière à ce que plus l'importance de secousse de la caméra est élevée, plus petite est la taille du fichier.

6. Procédé de formation d'image destiné à une utilisation dans un appareil de formation d'image ayant un moyen de formation d'image (10) pour obtenir une image mobile par l'intermédiaire d'une formation d'image et de la génération d'un fichier d'image de l'image mobile, le procédé comprenant les étapes suivantes :

recevoir une instruction pour commencer la formation d'image de l'image mobile ;

détecter une importance de secousse de la caméra après que la durée de formation d'image de l'image mobile a atteint une durée prédéterminée qui est plus courte qu'une durée de formation d'image continue prédéterminée pendant laquelle un fichier d'image est généré ;

déterminer si oui ou non l'importance de secousse de la caméra est supérieure, ou égale, à une importance prédéterminée ; et

terminer la formation d'image de l'image mobile pour terminer la génération du fichier d'image qui est capable de reproduire l'image mobile imagée jusque là, lorsque l'importance de secousse de la caméra est supérieure, ou égale, à l'importance prédéterminée.

7. Procédé de formation d'image destiné à une utilisation dans un appareil de formation d'image ayant un moyen de formation d'image (10) pour obtenir une image mobile à une fréquence d'image prédéterminée par l'intermédiaire d'une formation d'image et de la génération d'un fichier d'image de l'image mobile, le procédé comprenant les étapes suivantes :

recevoir une instruction pour commencer la formation d'image de l'image mobile ;

détecter une importance de secousse de la caméra après que la durée de formation d'image de l'image mobile a atteint une durée prédéterminée qui est plus courte qu'une durée de formation d'image continue prédéterminée pendant laquelle un fichier d'image est généré ;

déterminer si oui ou non l'importance de secousse de la caméra est supérieure, ou égale, à une importance prédéterminée ;

générer le fichier d'image à une taille plus petite en obtenant l'image mobile à une fréquence d'image qui est inférieure à la fréquence d'image prédéterminée jusqu'à la fin de la durée de formation d'image continue lorsque l'importance de secousse de la caméra est supérieure, ou égale, à l'importance prédéterminée ; et

terminer la formation d'image de l'image mobile pour terminer la génération du fichier d'image à la fin de la durée de formation d'image continue.

8. Produit programme informatique destiné à entraîner qu'un ordinateur exécute le procédé de formation d'image de la revendication 6.

9. Produit programme informatique destiné à entraîner qu'un ordinateur exécute le procédé de formation d'image de la revendication 7.

# FIG.1

EP 1 993 280 B1

# FIG.2

START

ST1
ACCEPT SETTINGS

ST2
IS IMAGING MODE SET TO MOVING PICTURE? →NO→ ST4 STILL PICTURE IMAGING PROCESSING

YES ST3
PREPARE FOR MOVING PICTURE IMAGING

ST5
RESET IMAGING TIME

ST6
NO← IS IMAGING INITIATED?

YES ST7
START IMAGING, RECORDING, AND COUNTING IMAGING TIME

ST8
IS END OF CONTINUOUS IMAGING TIME? →YES

NO ST9
NO← IS CAMERA SHAKE AMOUNT DETECTION START TIME?

YES ST10
DETECT CAMERA SHAKE AMOUNT

ST11
NO← CAMERA SHAKE AMOUNT ≧ TH1?

YES ST12
CLOSE IMAGE FILE

ST13
OPEN NEW IMAGE FILE

ST14
NO← IS IMAGING TERMINATED?

YES ST15
CLOSE IMAGE FILE

1

END

# FIG.3

```
        ( START )
            │           ST21
   ┌────────────────────┐
   │  PREPARE FOR STILL │
   │   PICTURE IMAGING  │
   └────────────────────┘
            │           ST22
   NO ◄─< IS IMAGING INITIATED? >
            │ YES       ST23
   ┌────────────────────┐
   │  PERFORM IMAGING   │
   │   AND RECORDING    │
   └────────────────────┘
            │           ST24
   NO ◄─< IS IMAGING TERMINATED? >
            │ YES
         ( END )
```

# FIG.4

EP 1 993 280 B1

EP 1 993 280 B1

# FIG.5

START

**ST31** ACCEPT SETTINGS

**ST32** IS IMAGING MODE SET TO MOVING PICTURE? —NO→ **ST34** STILL PICTURE IMAGING PROCESSING

YES

**ST33** PREPARE FOR MOVING PICTURE IMAGING

**ST35** RESET IMAGING TIME

NO→ **ST36** IS IMAGING INITIATED?

YES

**ST37** START IMAGING, RECORDING, AND COUNTING IMAGING TIME

(2)→

**ST38** IS END OF CONTINUOUS IMAGING TIME? —YES→ **ST45** CLOSE IMAGE FILE

NO

**ST39** IS CAMERA SHAKE AMOUNT DETECTION START TIME? —NO→ (3)

**ST46** OPEN NEW IMAGE FILE

YES

**ST40** DETECT CAMERA SHAKE AMOUNT

**ST41** CAMERA SHAKE AMOUNT ≧ TH2? —NO→

(3)

YES

**ST47** CHANGE TO NORMAL IMAGING FRAME RATE

**ST42** CHANGE FRAME RATE

**ST43** IS IMAGING TERMINATED? —NO→ (2)

YES

**ST44** CLOSE IMAGE FILE

(1)→

END

18

**FIG.6**

START

↓

ST51
ACCEPT SETTINGS

↓

ST52
IS IMAGING MODE SET TO MOVING PICTURE? —NO→ ST54 STILL PICTURE IMAGING PROCESSING

↓ YES

ST53
PREPARE FOR MOVING PICTURE IMAGING

↓

ST55
RESET IMAGING TIME

↓

ST56
NO← IS IMAGING INITIATED?

↓ YES

ST57
START IMAGING, RECORDING, AND COUNTING IMAGING TIME

(4) →

ST58
IS END OF CONTINUOUS IMAGING TIME? —YES→ ST66 CLOSE IMAGE FILE

↓ NO

ST59
NO← (5) IS CAMERA SHAKE AMOUNT DETECTION START TIME?

↓ YES

ST60
DETECT CAMERA SHAKE AMOUNT

ST67
OPEN NEW IMAGE FILE

↓

ST61
NO← CAMERA SHAKE AMOUNT ≧ TH2?

→ (5)

↓ YES

ST68
CHANGE TO NORMAL IMAGING FRAME RATE

ST62
CALCULATE CAMERA SHAKE FRAME RATE

↓

ST63
CHANGE FRAME RATE

↓

ST64
(4) ←NO— IS IMAGING TERMINATED?

↓ YES

ST65
CLOSE IMAGE FILE

(1) →

END

19

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005348178 A
- JP 2004056397 A

- EP 1689170 A2